(19) Europäisches Patentamt
European Patent Office
Office européen des brevets

(11) Publication number: 0 282 233 A1

# (12) EUROPEAN PATENT APPLICATION

(21) Application number: 88301862.4

(51) Int. Cl.4: B60R 1/06

(22) Date of filing: 03.03.88

(30) Priority: 07.03.87 GB 8705368

(43) Date of publication of application: 14.09.88 Bulletin 88/37

(84) Designated Contracting States: DE ES FR GB

(71) Applicant: Britax Limited
Kingsham Road
Chichester, West Sussex P019 2UG(GB)

(72) Inventor: Cunningham, Douglas James
42 Viking Way
Horndean Portsmouth Hampshire(GB)
Inventor: Assinder, Andrew John
47 Crossbush Road
Sumerley Bognor Regis West Sussex(GB)

(74) Representative: Hollinghurst, Antony
Britax Limited Patent Department
Chichester West Sussex PO19 2AQ(GB)

## (54) Hydraulic manual control unit.

(57) A hydraulic manual control unit comprises a cylindrical housing (10) having a control lever (24) projecting through one end and mounted thereon by means of a universal bearing (22), and three flexible walled bulbs (36, 38, 40) spaced around the cylindrical wall of the housing (10), each bulb (36, 38, 40) having a flexible tube projecting from the housing (10). Each bulb (36, 38, 40) also has a reinforcing rib (50, 52, 54) secured to its radially inner wall, the three reinforcing ribs (50, 52, 54) engaging with the inner end of the lever (24) so that displacement thereof from a position parallel to the cylinder axis causes compression of at least one of the bulbs (36, 38, 40) while allowing at least one other of the bulbs (36, 38, 40) to expand. The control unit can be used in a hydraulically adjustable exterior mirror for a motor vehicle.

FIG. 2.
36
26
52
38
10
40
50
54
44
42

FIG. 1.
24
22
12
14
20
18
16
56
42
10
26
2
2
36
50
38
44
28
30
32

EP 0 282 233 A1

Xerox Copy Centre

# HYDRAULIC MANUAL CONTROL UNIT

This invention relates to a hydraulic manual control unit and has particular application to a control unit for a hydraulically adjustable exterior mirror assenbly for a motor vehicle of the type disclosed in patent specification EP-A-0152219, in which three sealed hydraulic master-and-slave units are arranged with their slave actuators uniformly spaced about the pivot centre of a pivotally mounted reflective member.

In a mirror assembly of this type, it is desirable for the various hydraulic units to be filled and sealed before the assembly is mounted on a vehicle. In order to permit this, it is necessary for the control unit, which contains the master actuators, to be designed so as to minimise the size of the openings in the vehicle body through which it has to be passed during installation. One of the factors affecting the size of this hole is the volume of hydraulic liquid which has to be accommodated in the actuator. In order to minimise this volume, it is desirable to maximise the proportion of such liquid which is displaced by movement of the manual control. This invention is concerned with the provision of an actuator meeting this requirement.

According to the invention, a hydraulic manual control unit comprises a cylindrical housing having a control lever projecting through one end and mounted thereon by means of a universal bearing, and three flexible walled bulbs spaced around the cylindrical wall of the housing, each bulb having a a flexible tube projecting from the housing and a reinforcing rib secured to its radially inner wall, the three reinforcing ribs engaging with the inner end of the lever so that displacement thereof from a position parallel to the cylinder axis causes compression of at least one of the bulbs while allowing at least one other of the bulbs to expand.

In one form of the invention, the three hydraulic bulbs are formed as a single unit comprising a wall of flexible sheet-like material adapted to abut against the cylindrical inner wall of the housing and a second wall of flexible material welded to the first wall around the edges of each bulb, and the three ribs are formed as a single unit, adjacent ribs being interconnected by the second wall. Preferably, the ribs are formed integrally with the second wall.

An embodiment of the invention will now be described, by way of example, with reference to the accompanying drawings in which;

Figure 1 is a longitudinal cross-sectional view of an actuator in accordance with the invention with the operating lever in its central position;

Figure 2 is a cross-sectional view taken on the line 2-2 in Figure 1;

Figure 3 is a plan view of a component of the actuator shown in Figure 1;

Figure 4 is a cross-sectional view, similar to Figure 1, but showing the operator displaced from its central position;

Figure 5 is a cross-sectional view taken on the line 5-5 in Figure 4; and

Figure 6 is a cross-sectional view of a mirror head for use with the actuator shown in Figures 1 to 5.

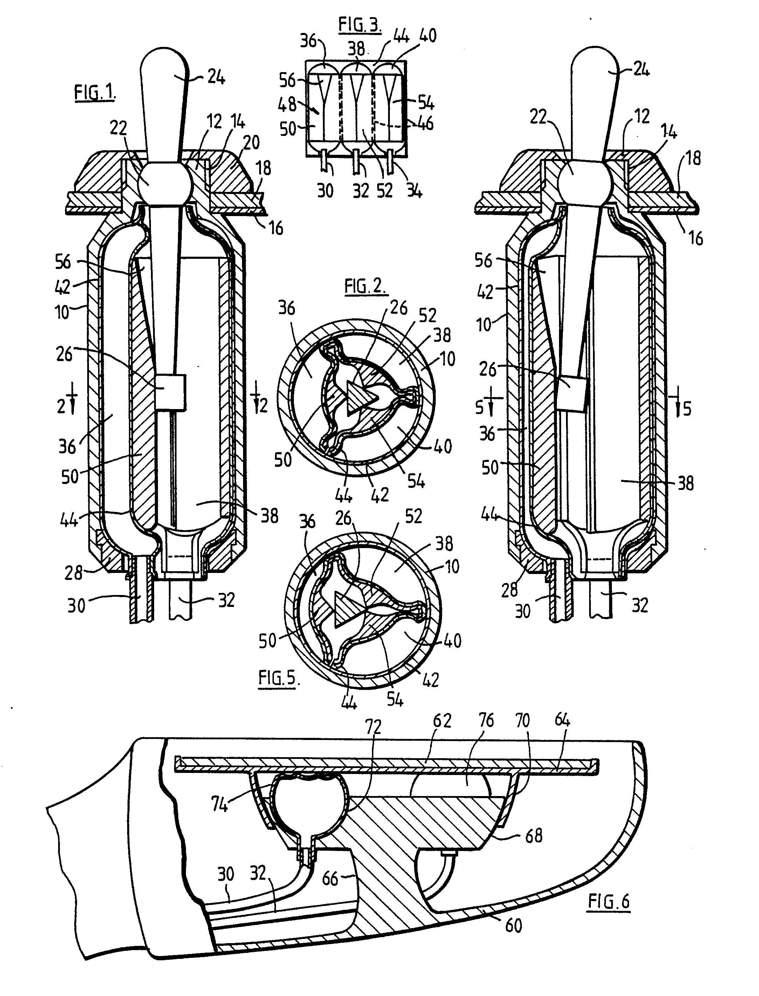

Referring to Figures 1 and 2, a manually operable actuator consists of a hollow cylindrical housing 10 with a reduced-diameter cylindrical neck 12 at one end. The neck 12 has a screw-threaded portion 14 on its free end and is intended in use, to project through a hole in a panel 16 coverer by a layer of trim material 18. The actuator is then secured in position by a nut 20. The neck 12 contains a part-spherical socket in which a convex spherical formation 22 is a snap fit. The spherical formation 22 is formed at an intermediate point along the end of a lever 24. The end of the lever 24 projecting into the housing 10 carries an integral pusher 26 of triangular cross-section, as can best be seen from Figure 2.

The other end of the housing 10 is closed by a cap 28 through which project three tubes 30, 32 and 34, only two of which are visible in Figure 1. Each of the tubes 30, 32 and 34 is connected to a respective flexible walled bulb 36, 38 and 40. The bulbs 36, 38 and 40 are located in the cylindrical housing 10 and uniformly spaced around the pusher 26.

Referring now also to Figure 3, the three bulbs 36, 38 and 40 are formed as an integral unit from two layers of flexible sheet material 42 and 44. The boundaries of the three bulbs 36, 38 and 40 are formed by way of weld lines such as the lines 46, which interconnect the two layers 42 and 44. A moulded unit 48 of flexible material is formed with three longitudinally extending ribs 50, 52 and 54, each of which has a part-cylindrical radially outer face and two inner faces oriented to give such rib a generally triangular cross-section. The upper end of the rib 50 is cut away at 56 and the other two ribs are similarly cut away for a purpose which will be explained hereinafter.

Between the ribs 50 and 52 and between the ribs 52 and 54, the insert 48 is as flexible as the sheet material 44. The entire assembly shown in Figure 3 can therefore be rolled up and fitted into the housing 10 prior to fitting the end cap 28.

Instead of formingthe unit 48 separately from the flexible sheet material 44, both may be moulded integrally with each other and the combinde unit welded to the sheet material 42.

In use, when the lever 24 is in its central position, as shown in Figures 1 and 2, there is an equal volume of hydraulic liquid in each of the bulbs 36, 38 and 40. If the upper end of the lever 24 is displaced to the right, as shown in Figure 4, the pusher 26 compresses the bulb 36 while allowing the bulbs 38 and 40 to expand, as can best be seen from Figure 5. The cut away portions 56 at the top ends of the ribs 50, 52 and 54 prevent their fouling the lever 24 during this movement. It will be observed that, in whichever direction the lever 24 is displaced, the total volume of liquid in the three bulbs 36, 38 and 40 remains the same.

The other ends of the three tubes, 30, 32 and 34 are connected to the vehicle exterior mirror shown in Figure 6, which comprises a housing 60 containging a reflective member 62 mounted on a carrier 64. A mushroom-like formation 66, having a convex part-spherical edge surface 68 is formed integrally with the housing 60 on the interior wall thereof. The carrier 64 has a flange 70 with a concave part-spherical inner surface which engages with the edge surface 66.

The surface of the formation 66 facing the carrier 64 contains three hemispherical recesses uniformly spaced arround the centre thereof. Only one of these recesses 72 is visible in Figure 6. The recess 72 contains a spherical flexible bulb 74 which is connected to the tube 30. Each of the other two recesses contain similar bulbs, bulb 76 being connected to the tube 32 and the other bulb (not shown) being connected to the tube 34. The volume of hydraulic liquid in each of the three tubes 30, 33 and 34 and their respective bulbs is chosen so that, when the lever 24 is in its central position, the three-spherical bulbs hold the flange 68 in contact with the edge surface 68 and the carrier 64 parallel to the facing surface of the formation 66.

## Claims

1. A hydraulic manual control unit comprising a cylindrical housing (10) having a control lever (24) projecting through one end and mounted thereon by means of a universal bearing (22), and three flexible walled bulbs (36, 38, 40) spaced around the cylindrical wall of the housing (10), each bulb (36, 38, 40) having a flexible tube projecting from the housing (10), characterised in that each bulb (36, 38, 40) has a reinforcing rib (50, 52, 54) secured to its radially inner wall, the three reinforcing ribs (50, 52, 54) engaging with the inner end of the lever (24) so that displacement thereof from a position parallel to the cylinder axis causes compression of at least one of the bulbs (36, 38, 40) while allowing at least one other of the bulbs (36, 38, 40) to expand.

2. A hydraulic manual control unit according to claim 1, wherein the three hydraulic bulbs (36, 38, 40) are formed as a single unit (48) comprising a first wall (42) of flexible sheet-like material adapted to abut against the cylindrical inner wall of the housing (10) and a second wall (44) of flexible material welded to the first wall (42) around the edges of each bulb (36, 38, 40), and the three ribs (50, 52, 54) are formed as a single unit, adjacent ribs (50, 52, 54) being interconnected by the second wall (44).

3. A hydraulic manual control unit according to claim 2, wherein the ribs (50, 52, 54) are formed integrally with the second wall (44).

4. A hydraulically adjustable exterior mirror for a motor vehicle having an actuator according to any preceeding claim.

FIG.1.
FIG.2.
FIG.3.
FIG.5.
FIG.6

European Patent Office

# EUROPEAN SEARCH REPORT

Application Number

EP 88 30 1862

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 583 687 (MITTELHÄUSER)<br>* Page 1, line 19 - page 2, line 32; figures 1-7 *<br>--- | 1 | B 60 R 1/06 |
| D,A | EP-A-0 152 219 (B.S.G. OVERSEAS LTD)<br>* Page 7, line 27 - page 8, line 13; figure 4 *<br>----- | 1 | |
| | | | **TECHNICAL FIELDS SEARCHED (Int. Cl.4)** |
| | | | B 60 R<br>F 15 B |

The present search report has been drawn up for all claims

| Place of search | Date of completion of the search | Examiner |
|---|---|---|
| THE HAGUE | 15-06-1988 | MAUSSER,T. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)